# EUROPÄISCHE PATENTSCHRIFT

(11) **EP 0 583 753 B1**
(45) Veröffentlichungstag und Bekanntmachung des Hinweises auf die Patenterteilung: **20.03.1996**
(21) Anmeldenummer: 93113000.9
(22) Anmeldetag: 13.08.1993
(51) Int. Cl.: B27D 5/00, B23Q 35/10

(54) **Kantenfräse mit einer Anschlagvorrichtung**
Portable edge milling machine combined with a guide means
Dispositif de butée avec dispositif de fraisage des bords

(30) Priorität: 17.08.1992 DE 4227071
(43) Veröffentlichungstag der Anmeldung: 23.02.1994
(73) Patentinhaber: KARL M. REICH MASCHINENFABRIK GmbH, D-72622 Nürtingen (DE)
(72) Erfinder: Reines, Wolfgang, D-72622 Nürtingen (DE)

(56) Entgegenhaltungen:
- AU-B- 502 606
- DE-A- 3 917 812
- DE-A- 4 113 543
- DE-C- 843 302
- US-A- 1 361 377
- US-A- 3 196 749
- US-A- 4 197 887
- US-A- 4 294 297
- US-A- 4 763 707
- US-A- 5 004 385

## Beschreibung

Die Erfindung bezieht sich auf eine Kantenfräse mit einer Anschlagvorrichtung gemäß Oberbegriff von Anspruch 1.

Aus der Patentschrift US-A-4,763,707 ist eine Oberfräse bekannt, bei der zum Herstellen von Schlitzen in der Mitte von Leisten eine selbstzentrierende Anschlagvorrichtung vorgesehen ist, deren Anschlagfinger zu beiden Seiten der Leiste anlegbar sind.

Diese Oberfräse ist zum Abfräsen von überstehenden Umleimern an plattenförmigen Werkstücken nicht geeignet, da keine Tastrolle vorgesehen ist. Der abzufräsende Umleimer muß nämlich mit der Oberfläche der Werkstückplatte genau fluchten, was mit der bekannten Anschlagvorrichtung nicht gewährleistet ist.

Weiterhin ist es aus der Patentschrift US-A-5,004,385 bekannt, zum Brechen der Kanten an den Schmalflächen von plattenförmigen Werkstücken eine Oberfräse mittels einer Anschlagvorrichtung an zwei zueinander senkrecht stehenden Ebenen zu führen. Dabei liegt ein flächiges Anschlagorgan auf der Oberfläche der Werkstückplatte auf und ein zweites Anschlagorgan in Form einer Tastrolle wird entlang des Umleimers geführt.

Eine solche Anschlagvorrichtung eignet sich nur für Platten mit ebenen Schmalflächen. Weist eine der Schmalflächen ein gerundetes oder geschwungenes Profil auf, dann lässt sich der Umleimer mit der bekannten Anschlagvorrichtung an seinen Enden nicht mehr einwandfrei abfräsen, da die Kantenfräse längs des geschwungenen Profils nicht mehr sicher geführt werden kann.

Aufgabe der vorliegenden Erfindung ist daher die Schaffung einer Kantenfräse der eingangs genannten Art, mit der die Umleimer bei plattenförmigen Werkstücken mit gerundeten Schmalflächen einwandfrei abgefräst werden können.

Diese Aufgabe wird erfindungsgemäß durch das im kennzeichnenden Teil des Anspruchs 1 angegebene Merkmal gelöst.

Bei der erfindungsgemäßen Anschlagvorrichtung mit zwei, zu beiden Seiten der Fräserwelle angeordneten, getrennten Führungselementen ist es jetzt nicht nur möglich, die Kantenfräse entlang der ebenen Oberfläche der Werkstückplatte einwandfrei zu führen und den überstehenden Umleimer abzufräsen, sondern die Tastrolle und damit das Fräswerkzeug folgt auch bei Verlassen der Oberfläche der Platte dem geschwungenen Profil der Schmalseite, wobei die Kantenfräse vom dem Fräswerkzeug nachlaufenden Führungselement und dem dazu senkrechten Anschlagorgan einwandfrei geführt wird. Dabei dienen Haltegriffe, die mit den Führungselementen verbunden sind, zum sicheren Halten der Kantenfräse. Es lassen sich somit auch zu gerundeten, geschwungenen und unebenen Profilen senkrecht verlaufende Umleimer, wie z.B. bei Post- und Softformingplatten mit beliebigen Querschnitten, einwandfrei bündig fräsen.

Bei der Bearbeitung von Innenradien ist es möglich, ein Führungselement abzunehmen.

In den Unteransprüchen sind weitere vorteilhafte Ausgestaltungen der Erfindung näher beschrieben.

So ist das zur Fräserwelle senkrechte Anschlagorgan einstellbar am Fräsergehäuse gelagert, so daß es möglich ist, abgeschrägte oder gerundete Kanten maßgenau abzufräsen.

Für die aus einem Kugellager bestehende Tastrolle ist eine Bremsvorrichtung vorgesehen, die verhindert, daß der Außenring des Kugellagers von der Fräserwelle mitgenommen wird und bei der Drehung die Oberfläche der Werkstückplatte beschädigt.

Im folgenden ist ein Ausführungsbeispiel der Erfindung unter Bezugnahme auf die Zeichnungen näher beschrieben.

Es zeigen:
- Fig. 1: Längsschnitt durch eine Anschlagvorrichtung nach Linie I-I in Fig. 2
- Fig. 2: Anschlagvorrichtung von vorne
- Fig. 3: Schnitt nach Linie III-III in Fig. 2
Mit einer Kantenfräse 1 mit Motorgehäuse 2, soll mit einem über eine Fräserwelle 3 antreibbaren Fräswerkzeug 4 der überstehende Umleimer 5 eines plattenförmigen Werkstücks 6 zur Oberfläche 7 des Werkstücks 6 bündig gefräst werden. (Fig. 1)
Zur Führung der Kantenfräse 1 dient eine Anschlagvorrichtung 8, die aus Führungselementen 9, 9' parallel zur Fräserwelle 3 und ein dazu senkrechtes Anschlagorgan 10 mit Anschlagfläche 11 besteht. Zum Abtasten der Oberfläche 7 von Werkstück 6 dient eine als Kugellager ausgebildete Tastrolle 12, die mit der Fräserwelle 3 fest verbunden ist.

Die Führungselementen der Anschlagorgan 10 der Anschlagvorrichtung 8 sind mit einem Halterahmen 13 verbunden, der auf einen Gehäusehals 14 anklemmbar ist.

Das Anschlagorgan 10 ist dabei am Halterahmen 13 parallel zur Fräserwelle 3 verschiebbar gelagert. Dabei dient eine in einen Schlitz 15 von Halterahmen 13 eingreifende Schraube 16 mit Knebelgriff 17 zur Grobverstellung und eine im Halterahmen 13 gelagerte und in das Anschlagorgan 10 einschraubbare Schraubspindel 18 zur Feineinstellung von Anschlagorgan 10.

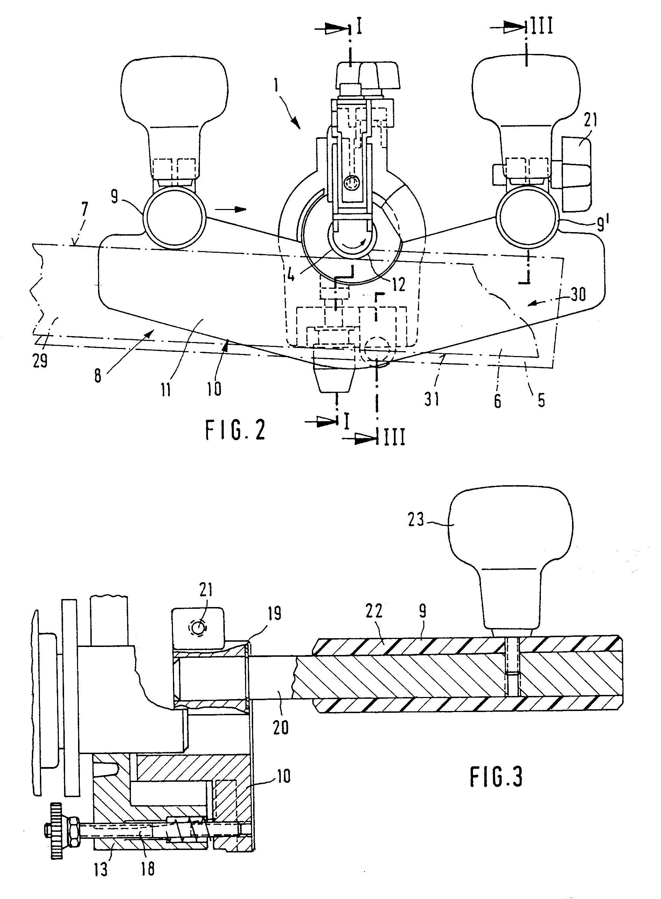

Wie Fig. 2 zeigt, sind die walzenförmigen Führungselemente 9, 9' in Form von Führungsfingern voneinander getrennt zu beiden Seiten der Fräserwelle 3 angeordnet.

Dazu weist, wie Fig. 3 zeigt, das Anschlagorgan 10 je ein geschlitztes Auge 19 auf, in das der Zapfen 20 von Führungselement 9, 9' einsteckbar und mit einer Knebelschraube 21 festklemmbar ist. Zur Schonung der Oberfläche 7 von Werkstück 6 ist auf den Zapfen 20 von Führungselement 9, 9' eine Hülse 22 aus Kunststoff aufgesteckt. Zur Führung der Kantenfräse 1 dienen Haltegriffe 23, die mit dem Führungselement 9, 9' verschraubt sind.

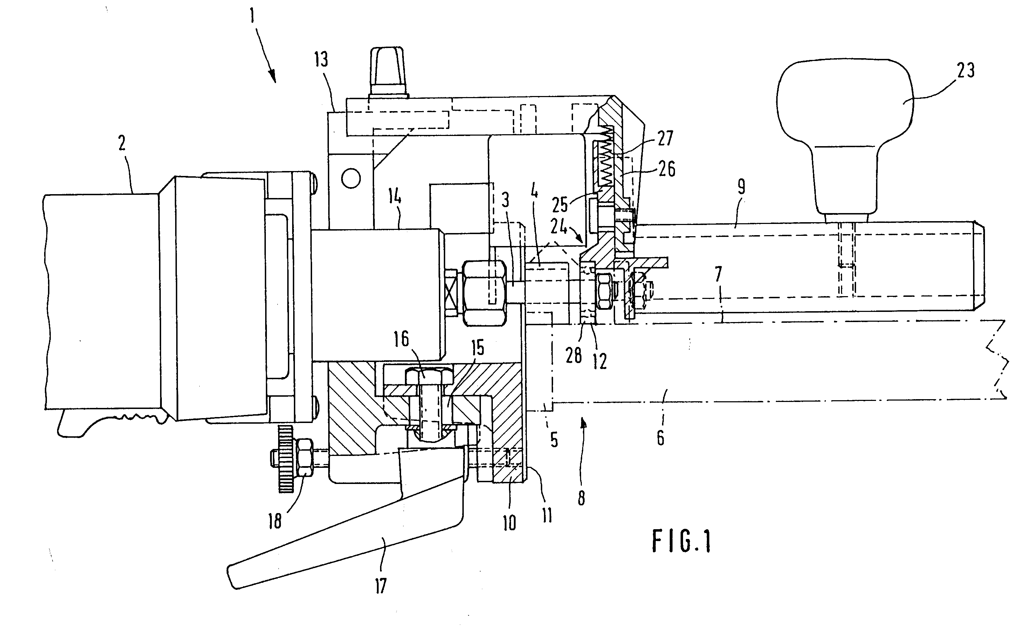

Wie Fig. 1 weiterhin zeigt, ist eine auf die Tastrolle 12 einwirkende Bremsvorrichtung 24 vorgesehen, deren Bremsorgan 25 an einem Bügel 26 von Halterahmen 13 senkrecht zur Fräserwelle 3 verschiebbar gelagert ist. Dabei drückt eine Feder 27 das Bremsorgan 25 gegen den Außenring 28 von Tastrolle 12 und verhindert ein Mitlaufen dieses Außenrings beim Fräsvorgang.

Die Funktion der erfindungsgemäßen Anschlagvorrichtung 8 ist aus Fig. 2 ersichtlich, die diese Anschlagvorrichtung 8 von vorne zeigt.

Das plattenförmige Werkstück 6 weist eine ebene Oberfläche 7 und eine dazu senkrechte Schmalfläche 29 auf, mit der der Umleimer 5 verleimt ist.

Die zur Schmalfläche 29 senkrechte Schmalfläche 30 weist ein S-förmiges Profil auf.

Beim Abfräsen des überstehenden Umleimers 5, in Fig. 2 von links nach rechts, wird die Kantenfräse 1 an der Oberfläche 7 von Werkstück 6 mit dem nachlaufenden Führungselement 9, und der Tastrolle 12 und am dazu senkrechten Umleimer 5 mit dem Anschlagorgan 10 sicher geführt. Das vorlaufende Führungselement 9' ist von der Oberfläche 7 abgehoben.

Erreicht das Fräswerkzeug 4 die Schmalfläche 30, dann folgt die Tastrolle 12 dem S-förmigen Profil, eine Führung der Kantenfräse 1 ist durch das Führungselement 9 und das Anschlagorgan 10 nach wie vor gegeben. Zur Bearbeitung der Unterseite 31 wird Werkstück 6 umgedreht.

## Patentansprüche

1. Kantenfräse (1) mit einem Motorgehäuse (2), einer Fräserwelle (3) und einer Anschlagvorrichtung (8) wobei die Anschlagvorrichtung (8) einen am Motorgehäuse (2) angeordneten Halterahmen (13) aufweist, an dem zu beiden Seiten der Fräserwelle (3) zu dieser parallele, getrennte Führungselemente (9, 9') und ein dazu senkrechtes Anschlagorgan (10) angeordnet sind, **dadurch gekennzeichnet**, daß zum Abfräsen von überstehenden Umleimern (5) an den Schmalflächen (29) von plattenförmigen Werkstücken (6) eine der Führungselemente (9) zusammen mit einer gleichachsig auf der Fräserwelle (3) gelagerten Tastrolle (12) einen zur Fräserwelle (3) parallelen Anschlag (9, 12) bildet.

2. Kantenfräse nach Anspruch 1, **dadurch gekennzeichnet**, daß die Führungselemente (9,9') in Form von sich parallel zur Fräserwelle (3) erstreckenden, zylindrischen Führungsfingern abnehmbar mit dem Motorgehäuse (2) verbunden sind.

3. Kantenfräse nach Anspruch 1 oder 2, **dadurch gekennzeichnet**, daß am Halterahmen (13) das zur Fräserwelle (3) senkrechte Anschlagorgan (10) verschiebbar und die Führungselemente (9,9') abnehmbar gelagert sind.

4. Kantenfräse nach einem der Ansprüche 1 bis 3, **dadurch gekennzeichnet**, daß an den Führungselementen (9,9') Haltegriffe (23) befestigt sind.

## Claims

1. A laminate trimmer (1) having a motor casing (2), a cutter bar (3) and a stop device (8), said stop device (8) having a holding frame (13) disposed on said motor casing (2), which frame has on both sides of said cutter bar (3) separate guide elements (9, 9') parallel thereto and a stop element (10) vertical thereto, **characterized in that** for trimming off the projecting edges (5) from the narrow faces (29) of board-like stock (6) one of said guide elements (9) forms together with a feeler roller (12) mounted on said cutter bar (3) with the same axis a stop (9, 12) parallel to said cutter bar (3).

2. A laminate trimmer according to Claim 1, **characterized in that** said guide elements (9, 9') in the form of cylindrical guide fingers extending parallel to said cutter bar (3) are connected detachably to said motor casing (2).

3. A laminate trimmer according to Claim 1 or Claim 2, **characterized in that** on said holding frame (13) said stop element (10) vertical to said cutter bar (3) is mounted movably and said guide elements (9, 9') are mounted detachably.

4. A laminate trimmer according to one of Claims 1 to 3, **characterized in that** handles (23) are attached to said guide elements (9, 9').

## Revendications

1. Affleureuse (1) avec un carter moteur (2), un arbre de fraisage (3) et un dispositif de butée (8), ce dernier présentant un cadre de fixation (13) disposé sur le carter moteur (2), cadre sur lequel sont disposés de part et d'autre de l'arbre de fraisage (3) et parallèlement à celui-ci deux éléments de guidage (9, 9') ainsi qu'un organe de butée (10) perpendiculaire à ceux-ci,
caractérisée par le fait
que, pour le fraisage d'alaises (5) débordantes sur les rives (29) de pièces planes (6), l'un des deux éléments de guidage (9), en commun avec un galet de palpage (12) sur un axe parallèle à celui de l'arbre de fraisage (3), forme une butée (9, 12) parallèle à l'axe de fraisage (3).

2. Affleureuse selon la revendication 1)
caractérisée par le fait
que les éléments de guidage (9, 9'), en forme de doigts de guidage cylindriques s'étendant parallèlement à l'arbre de fraisage (3), sont reliés de manière amovible au carter moteur (2).

3. Affleureuse selon l'une des revendications 1) ou 2)
caractérisée par le fait
que l'organe de butée (10) perpendiculaire à l'arbre de fraisage (3) peut être décalé à volonté sur le cadre de fixation (13) et est disposé de façon amovible, tout comme les éléments de guidage (9, 9').

4. Affleureuse selon l'une des revendications 1) à 3)
caractérisée par le fait
que des poignées de conduite (23) sont disposées sur les éléments de guidage (9, 9').
